(19) Europäisches Patentamt
European Patent Office
Office européen des brevets

(11) **EP 4 512 952 A1**

(12) **EUROPEAN PATENT APPLICATION**
published in accordance with Art. 153(4) EPC

(43) Date of publication:
**26.02.2025  Bulletin 2025/09**

(21) Application number: **23791734.9**

(22) Date of filing: **10.04.2023**

(51) International Patent Classification (IPC):
**D06N 3/00** (2006.01)          **B32B 5/26** (2006.01)
**D06N 3/14** (2006.01)

(52) Cooperative Patent Classification (CPC):
**B32B 5/26; D06N 3/00; D06N 3/14**

(86) International application number:
**PCT/JP2023/014582**

(87) International publication number:
**WO 2023/204085 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.04.2022  JP 2022069606**

(71) Applicant: **Asahi Kasei Kabushiki Kaisha
Tokyo 1000006 (JP)**

(72) Inventor: **YANAGITA, Naoki
Tokyo 100-0006 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54)     **ARTIFICIAL LEATHER, AND VEHICLE INTERIOR SKIN MATERIAL INCLUDING SAME**

(57)     Provided are: an artificial leather containing plant fibers and having both flexibility and abrasion resistance due to enhanced entanglement between fibers; and a vehicle interior skin material including same. The artificial leather comprises a substrate made of fiber cloth and a surface fiber layer laminated on the substrate, and satisfies the following features (1)-(3): (1) both the substrate and the surface fiber layer contain plant fibers; (2) the content of plant fibers in the artificial leather is at least 50 mass% with respect to the total weight of the artificial leather; and (3) the peel strength between the substrate and the surface fiber layer is at least 2 N/cm. The vehicle interior skin material includes said artificial leather.

EP 4 512 952 A1

**Description**

FIELD

The present invention relates to artificial leather, and to a vehicle interior skin material comprising the same.

BACKGROUND

Artificial leather composed of synthetic fibers is employed for a wide variety of uses including furniture, clothing, automobile interior finishings, shoes and bags, but demands have increased in recent years for artificial leather produced using plant fibers.

PTL 1 discloses obtaining artificial leather having a specified tensile strength, by blending leaf fibers and curable polymer fibers in a fixed proportion and thermally fusing the curable polymer fibers, the process using a plant starting material.

[CITATION LIST]

[PATENT LITERATURE]

[PTL 1] Japanese Unexamined Patent Publication No. 2017-106158

SUMMARY

[TECHNICAL PROBLEM]

However, the invention described in PTL 1 gives no consideration to the tangled state between the fibers to reduce friction on the surface, and its abrasion resistance has been insufficient without providing a resin coating on the surface. Moreover, while the invention described in PTL 1 exhibits increased abrasion resistance when a resin coating has been formed on the surface, the flexibility is significantly reduced, making it difficult to obtain a satisfactory feel.

The problem to be solved by the invention, in light of this level of the prior art, is to solve the aforementioned problems of the prior art by providing artificial leather exhibiting both flexibility and abrasion resistance by including plant fibers and having increased tangling between the fibers, as well as a vehicle interior skin material comprising the same.

[SOLUTION TO PROBLEM]

As a result of ardent experimentation with the aim of solving this problem, the present inventors have completed this invention upon finding, unexpectedly, that the problem can be solved by artificial leather that includes plant fibers and has the following construction.

Specifically, the present invention is as follows.

[1] Artificial leather comprising a base material composed of a fiber fabric, and a front side fiber layer layered on the base material, the artificial leather satisfying the following features (1) to (3):

(1) the base material and the front side fiber layer both comprise plant fibers;
(2) the content of the plant fibers in the artificial leather is 50 mass% or greater with respect to the total mass of the artificial leather; and
(3) the peel strength between the base material and the front side fiber layer is 2 N/cm or greater.

[2] The artificial leather according to [1] above, wherein the content of the plant fibers in the base material is 50 mass% or greater with respect to the total mass of the base material.
[3] The artificial leather according to [1] or [2] above, wherein the artificial leather comprises a binder resin.
[4] The artificial leather according to [3] above, wherein the content of the binder resin is greater than 0 mass% and 20 mass% or lower with respect to the total mass of the artificial leather.
[5] The artificial leather according to [3] or [4] above, wherein the binder resin is a polyurethane resin.
[6] The artificial leather according to [5] above, wherein the polyurethane resin is a water-dispersed polyurethane resin.
[7] The artificial leather according to any one of [1] to [6] above, wherein the LID value, as the ratio of the fiber length L with respect to the fiber diameter D of the plant fibers in the front side fiber layer, is 50 to 4000.

[8] The artificial leather according to any one of [1] to [7] above, wherein the front side fiber layer includes cellulose fibrils.

[9] The artificial leather according to any one of [1] to [8] above, wherein the specific surface area of the fibers composing the front side fiber layer is 0.10 m$^2$/g or greater.

[10] The artificial leather according to any one of [1] to [9] above, further satisfying the following feature (4):

(4) the front side fiber layer includes cellulose fibrils having a specific surface area of 0.5 m$^2$/g to 1.5 m$^2$/g.

[11] The artificial leather according to any one of [1] to [10] above, wherein the front side fiber layer includes synthetic fibers.

[12] The artificial leather according to [11] above, wherein the content of the synthetic fibers in the front side fiber layer is 25 mass% to 50 mass% with respect to the total mass of the fibers in the front side fiber layer.

[13] The artificial leather according to any one of [1] to [12] above, wherein the base material is a woven fabric.

[14] The artificial leather according to [13] above, wherein the cover factor CF of the woven fabric is 15 to 40.

[15] The artificial leather according to any one of [1] to [13] above, wherein the height Sz of the surface irregularities of the artificial leather is 200 μm to 600 μm.

[16] The artificial leather according to any one of [1] to [15] above, wherein the surface of the artificial leather has standing fibers.

[17] The artificial leather according to any one of [1] to [16] above, wherein the artificial leather is dyed.

[18] A vehicle interior skin material which includes artificial leather according to any one of [1] to [17] above.

[ADVANTAGEOUS EFFECTS OF INVENTION]

The artificial leather of the invention and the vehicle interior skin material comprising it contain plant fibers, while also exhibiting flexibility and abrasion resistance.

DESCRIPTION OF EMBODIMENTS

The invention will now be explained in detail by embodiments.

One embodiment of the invention is artificial leather comprising a base material composed of a fiber fabric, and a front side fiber layer layered on the base material, the artificial leather satisfying the following features (1) to (3):

(1) the base material and the front side fiber layer both comprise plant fibers;
(2) the content of the plant fibers in the artificial leather is 50 mass% or greater with respect to the total mass of the artificial leather; and
(3) the peel strength between the base material and the front side fiber layer is 2 N/cm or greater.

[Artificial leather]

The artificial leather of the embodiment comprises a base material composed of a fiber fabric, and a front side fiber layer layered on the base material, the front side fiber layer being layered only on one side of the base material or the front side fiber layer being layered on both sides of the base material. The artificial leather of the embodiment is produced, for example, by layering staple fibers on one or both sides of the base material by a papermaking method, and then carrying out tangling treatment to tangle the staple fibers together or to tangle the staple fibers with the base material. The term "artificial leather" as used herein means a leather-like sheet material produced artificially.

The base material and front side fiber layer both comprise plant fibers. Plant fibers include, for example, natural cellulose fibers such as cotton, linen, ramie, hemp, pulp, bamboo, pineapple, banana, coconut, kapok, kenaf and getto.

The content of plant fibers in the artificial leather of the embodiment is 50 mass% or greater with respect to the total mass of the artificial leather. A higher plant fiber content can reduce the environmental load during production and disposal, and results in a satisfactory tactile sensation due to the high thermal conductivity of the plant fibers.

The artificial leather of the embodiment has a peel strength of 2 N/cm or greater and preferably 3 N/cm or greater between the base material and the front side fiber layer. If the peel strength is 2 N/cm or greater the tangling strength between the fibers will be increased, so that sufficient abrasion resistance will be obtained to reduce surface damage during actual use even without providing a resin coating, while the flexibility will also increase.

For a peel strength of 2 N/cm or greater between the front side fiber layer and the base material it is preferred to adjust the types of staple fibers and spun yarn used in the front side fiber layer and base material, the fiber lengths, thicknesses and number of twists, the basis weight, thickness and density of the front side fiber layer and base material, and the processing conditions during the tangling step. Tangling methods such as hydroentangling or needle punching are known, with hydroentangling being preferred from the standpoint of preventing damage to the base material. With hydroentangling, the diameter of the nozzle that sprays the water stream and the water pressure and direction of the water jet stream may be adjusted to adjust the peel strength. A binder resin may also be added to increase the peel strength between the front side fiber layer and the base material.

Hydroentangling is especially important for increasing the peel strength to 2 N/cm or greater.

[Front side fiber layer]

The LID value, as the ratio of the fiber length L with respect to the fiber diameter D of the plant fibers in the front side fiber layer, is preferably 50 or greater and more preferably 100 or greater, and preferably 4000 or smaller, more preferably 3000 or smaller and even more preferably 2000 or smaller. If the LID value is 50 to 4000 then the dispersibility and openability of the staple fibers in the slurry prepared by dispersing the staple fibers in water will be satisfactory, the strength of the front side fiber layer will be satisfactory, and pilling by abrasion will be less likely to occur.

The aforementioned range is effective for ensuring that the peel strength between the front side fiber layer and base material is 2 N/cm or greater.

The front side fiber layer preferably includes cellulose fibrils from the viewpoint of increasing the tangling force between the fibers by increasing the static friction force. Cellulose fibrils are fibers or bundles of fibers with fiber sizes of several hundred nm to several mm, known as "fibrils", which are composed of natural cellulose. Fibrillated cellulose is one type of cellulose fibrils. Fibrillated cellulose may be independent fibrils shed from fiber surfaces, or their bundled microfilaments, which are obtained by micronization treatment of a plant-derived material such as pulp using an apparatus that applies a high degree of shear force, such as a highpressure homogenizer, ultrahigh-pressure homogenizer or grinder.

For mechanical strength, the specific surface area of the fibers composing the front side fiber layer is preferably 0.10 m$^2$/g or greater, more preferably 0.20 m$^2$/g or greater, even more preferably 0.50 m$^2$/g or greater and most preferably 0.80 m$^2$/g or greater, and preferably 2.0 m$^2$/g or lower, more preferably 1.6 m$^2$/g or lower and even more preferably 1.2 m$^2$/g or lower.

The specific surface area of the fibers composing the front side fiber layer is the value measured by the BET method.

The front side fiber layer preferably includes cellulose fibrils with a specific surface area of 0.5 m$^2$/g to 1.5 m$^2$/g. The specific surface area of the cellulose fibrils in the front side fiber layer is more preferably 0.6 m$^2$/g to 1.0 m$^2$/g and even more preferably 0.6 m$^2$/g to 0.8 m$^2$/g.

The content of cellulose fibrils with a specific surface area of 0.5 m$^2$/g to 1.5 m$^2$/g in the front side fiber layer is preferably 20 mass% or greater and more preferably 50 mass% or greater with respect to the total mass of the fibers in the front side fiber layer.

The front side fiber layer may also include synthetic fibers for the purpose of improving the mechanical properties such as tensile strength, and the flame retardance. When the fiber layer includes synthetic fibers, the content of the synthetic fibers is preferably 25 mass% to 50 mass% with respect to the total mass of the fibers in the front side fiber layer. If the synthetic fiber content is 25 mass% or greater the effect obtained by compositing with the synthetic fibers will be adequately exhibited, and if it is 50 mass% or lower the proportion of plant fibers will be sufficiently high, thus reducing the environmental load during production and disposal, and providing the high thermal conductivity of the plant fibers to produce a satisfactory tactile sensation. If the front side fiber layer comprises synthetic fibers, which have different dye affinity than plant fibers, it will be possible to obtain an excellent design property in a melange style, due to the difference in dye affinity. Examples of synthetic fibers to be used in the front side fiber layer include polyester, nylon 6, nylon 66, acryl, polyurethane and polylactic acid fibers.

[Base material]

The content of the plant fibers in the base material in the artificial leather of the embodiment is preferably 50 mass% or greater with respect to the total mass of the base material. The percentage is more preferably 60 mass% or greater and even more preferably 80 mass% or greater. If the content is 50 mass% or greater, the environmental load during production and disposal will be low and the tactile sensation will be satisfactory, due to the high thermal conductivity of the plant fibers.

The base material may comprise fibers other than plant fibers, preferably in a range of 50 mass% or lower with respect to the total mass of the base material, for improved mechanical properties such as tensile strength, and flame retardance. When the base material comprises fibers other than plant fibers, they may be synthetic fibers such as polyester, nylon 6, nylon 66, acryl, polyurethane or polylactic acid fibers, semisynthetic fibers such as acetate, triacetate or promix fibers, regenerated fibers such as rayon, cupra or lyocell fibers, or inorganic fibers such as glass fibers or carbon fibers. It is particularly preferred to use synthetic fibers from the viewpoint of mechanical properties.

The base material is not particularly restricted so long as it is a fiber fabric, and it may be a woven fabric, knitted fabric or nonwoven fabric, for example. The fibers composing the base material may be of a single type or a plurality of different types. For example, the base material may be a woven or knitted fabric obtained using spun yarn of a composite of different materials, spun from staple fibers of several different types, or a woven or knitted fabric obtained using several different types of spun yarn or filament yarn of different materials. The base material is preferably a woven fabric from the viewpoint of ensuring that the peel strength between the front side fiber layer and the base material is 2 N/cm or greater.

When the base material is a woven fabric, the cover factor CF of the woven fabric, defined by the following formula:

[Mathematical Formula 1]

$$CF = \sqrt{1/C_w} * D_w + \sqrt{1/C_f} * D_f$$

{where Cw is the total warp fineness (yarn count), Dw is the warp density (yarns/2.54 cm), Cf is the total weft fineness (yarn count) and Df is the weft density (yarns/2.54 cm)}, is preferably 15 or greater, more preferably 20 or greater and even more preferably 25 or greater, and also preferably 40 or less. The aforementioned range is effective for ensuring that the peel strength between the front side fiber layer and base material is 2 N/cm or greater.

The above definitional equation for the cover factor is not intended to limit the fibers of the woven fabric to spun yarn of cotton, and when using long filaments, the calculation may be made in terms of the yarn count corresponding to the fineness. If the cover factor is 15 or greater, the lack of irregularities formed in the artificial leather surface will result in a satisfactory tactile sensation, while the stronger degree of tangling with the front side fiber layer will improve the peel strength with the front side fiber layer. If the cover factor is 40 or lower, on the other hand, the flexibility of the artificial leather will be higher, resulting in satisfactory feel and a satisfactory shape-following property for the complex shapes of automobile interior finishings and furniture.

[Binder resin]

The artificial leather of the embodiment may comprise a binder resin from the viewpoint of further increasing the tangling strength between fibers. Without a binder resin, on the other hand, the artificial leather will have the advantage of a very high follow-up property for the shapes of automobile interior finishings and furniture. Whether or not to include or not include a binder resin may therefore be selected as appropriate for the desired properties for the purpose of use.

When the artificial leather includes a binder resin, the binder resin content is preferably greater than 0 mass% and 20 mass% or lower, and more preferably greater than 0 mass% and 15 mass% or lower, with respect to the total mass of the artificial leather. If the binder resin content is 20 mass% or lower, the mechanical properties such as abrasion resistance and tensile strength will be improved while the flexibility of the artificial leather will be sufficiently high, thus resulting in a satisfactory feel and tending to provide a satisfactory follow-up property for the complex shapes of automobile interior finishings and furniture. From the viewpoint of increasing bonding strength between the fibers composing the front side fiber layer, the content of the binder resin is preferably 5 mass% or greater and more preferably 8 mass% or greater.

The type of binder resin is not particularly restricted and may be an acrylic resin, urethane resin, polyester resin or vinyl acetate resin, for example. The binder resin is preferably a urethane resin from the viewpoint of both flexibility and durability, and it is most preferably a water-dispersed urethane resin from the viewpoint of reducing environmental load.

[Other preferred embodiments of artificial leather]

From the viewpoint of obtaining a smooth feel such as suede or nubuck, the artificial leather of the embodiment has a surface irregularity height Sz of preferably 200 μm to 600 μm, more preferably 500 μm or lower and even more preferably 450 μm or lower. If Sz is 200 μm or greater the surface will have suitable irregularities, producing a soft tactile sensation. If Sz is 600 μm or lower, the surface will be unlikely to exhibit a rough tactile sensation.

In order to obtain a Sz value of 200 μm to 600 μm, the surface preferably has standing fibers, with the brushed conditions allowing the Sz value to be appropriately adjusted. The Sz value can be adjusted by changing the types of staple fibers and spun yarn used in the front side fiber layer and base material, the fiber lengths, thicknesses and number of twists, the basis weight, thickness and density of the front side fiber layer and base material, the type and amount of binder resin, and the processing conditions during the tangling step.

The artificial leather of the embodiment is preferably dyed. The dyeing method is preferably dyeing treatment with a jet dyeing machine from the viewpoint of obtaining an enhanced feel.

The artificial leather of the embodiment may have a resin layer formed on the surface for improved abrasion resistance and flame retardance. Coloration is also possible by providing a resin layer with a pigment. The method of forming the resin layer is not particularly restricted, and it may be a method of applying a resin solution having the resin dissolved in a solvent and then drying off the solvent to form a resin layer, a method of applying a resin solution and then reacting the resin (dry method), a method of attaching a resin film composed of a synthetic resin (laminate method), or a method of applying a resin solution and then guiding it to and solidifying it in a coagulating bath (wet method).

[Vehicle interior skin material]

Another embodiment of the invention is a vehicle interior skin material comprising the aforementioned artificial leather. The vehicle interior skin material of the embodiment can be suitably used as a surface covering material to be attached to a sheet, door trimming, instrument panel or ceiling, for example.

The vehicle interior skin material of the embodiment may also have a urethane foam material laminated on the back side to impart a cushioning property. It may also be embossed or embroidered for design or functionality.

EXAMPLES

The present invention will now be explained in more specific detail through the following Examples and Comparative Examples, with the understanding that the invention is in no way limited to the Examples.

The following methods were used to measure the physical properties of the artificial leathers used in the following Examples.

(a) Peel strength between fiber layer and base material (N/cm)

Two rectangular samples (sample A and B) each with a short side of 2.5 cm and a long side of 10 cm are cut out from the artificial leather so that the long side direction of the cut out mark on the artificial leather of sample A is perpendicular to the long side direction of the cut out mark on the artificial leather of sample B, and the surface layer sides of both samples (the brushed surface side, in the case of brushed artificial leather) are coated with the synthetic rubber adhesive ThreeBond 1521 (ThreeBond Co., Ltd.) at a coating amount of 50 mg/cm². Immediately after coating, the adhesive-coated sides of the two samples are pasted together with their long sides and short sides matching. The pasted sample is compressed using a mangle at 0.4 MPa and allowed to stand for 5 hours or longer at 20°C, 50% RH. The pasted sample is cut off with scissors at both 2.5 mm side ends to form a size of 2.0 cm (width) × 10 cm (length), and a cut is made from the short side at the boundary between the base material and front side fiber layer portion of sample A using a razor blade, after which the base material and front side fiber layer portion are peeled with the finger to about 2 cm. A TENSILON universal testing machine by A&D Co., Ltd. (model RTC-1210A) is then used, gripping the base material and front side fiber layer portion with a gripping tool with a grip length of 2 cm, and measuring the stress while peeling the base material and front side fiber layer portion by pulling at a cross head speed of 100 mm/min and a recording paper speed of 50 mm/min. Of the peaks in the resulting stress-displacement chart, the peak values of the three largest peaks in order and the peak values of the three smallest peaks in order are read off and the average value for the total of 6 is calculated. Using the pasted sample, a cut is made in the same manner at the boundary between the base material and the front side fiber layer portion of sample B, and the same measurement is performed. The average for the two results was divided by the sample width (2 cm) and recorded as the peel strength.

(b) Cover factor CF

The cover factor CF was calculated using the following formula:

[Mathematical Formula 2]
$$CF = \sqrt{1/C_w} * D_w + \sqrt{1/C_f} * D_f$$

{where Cw is the total warp fineness (yarn count), Dw is the warp density (yarns/2.54 cm), Cf is the total weft fineness (yarn count) and Df is the weft density (yarns/2.54 cm)}. When the fibers used were long filaments, the calculation was made in terms of the yarn count corresponding to the fineness.

(c) Specific surface area of plant fibers used as starting material for front side fiber layer, and fibers in front side fiber layer (m²/g)

The specific surface area was measured using an automatic specific surface area measuring apparatus (Gemini 2360 by Shimadzu Corp.). The sample mass used for the measurement was 0.20 to 0.60 g. The sample-loaded cell was dried for 30 minutes under conditions of 60°C, and cooled for 10 minutes. Next, the cell was set in the specific surface area measuring apparatus, and with nitrogen gas adsorption onto the sample surface, the following BET formula:

$$P/\{V(P0 - P)\} = 1/(Vm \times C) + \{(C - 1)/(Vm \times C)\}(P/P0)$$

{where P: pressure, P0: saturated water vapor pressure (Pa), V: nitrogen adsorption (mg/g), Vm: monolayer adsorption (mg/g), C: adsorption heat-related parameter (-) < 0}
was applied to calculate the specific surface area. The measuring samples were prepared in the following manner.

<Plant fibers used as starting material for front side fiber layer>

The process of centrifugal separation, supernatant removal and ethanol dilution was repeated 3 times using an aqueous dispersion of the plant fibers. The process of centrifugal separation, supernatant removal and t-butanol dilution was then repeated twice using the aforementioned ethanol dispersion of the plant fibers. Next, the aforementioned t-butanol dispersion of the plant fibers was centrifuged, the supernatant was removed, and a small amount of t-butanol was added, after which it was freeze-dried to prepare a measuring sample.

<Fibers for front side fiber layer>

The front side fiber layer was detached from the artificial leather, and when the front side fiber layer had a binder resin and/or surface resin layer, a solvent was used that was able to dissolve the binder resin and/or surface resin layer without dissolving the fibers, thus dissolving and removing the binder resin and/or surface resin layer, to prepare a measuring sample.

(d) Height Sz of surface irregularities of artificial leather

A one-shot microscope (VR-3200 by Keyence Corp.) was used to observe the artificial leather sampled at a size of 15 cm$^2$, photographing it at 40x magnification. In order to exclude irregularities not due to the front side fiber layer from the photographed data, surface shape correction (two-dimensional curved surface correction) was carried out, selecting the entire measurement range. The "Surface roughness meter" analysis window was then shown, with "Entire measurement range" as the measurement range and with filter settings of lowpass filter: None and highpass filter: None, to obtain the maximum height Sz. Ten measurements were conducted, changing the measured section in the sampled artificial leather, and the average value was used as the result. For the measurement, when the artificial leather surface had deformation such as embossing or embroidery, the 10 measuring locations were selected outside of the deformed sections.

(e) Abrasion resistance

A wear resistance test was conducted on the front side fiber layer surface of the artificial leather under a pressing load (12 kPa), according to JIS-L-1096 (2015 ed.) 8.19, "Wear strength" (Method E: Martindale method). The relationship between the number of abrasions and the state of exposure of the base material was assessed on the following scale, with G and VG deemed to be acceptable.

P: Base material exposed at 30,000 abrasions.
F: Base material not exposed at 30,000 abrasions, but scrim exposed at 40,000 abrasions.
G: Base material not exposed at 40,000 abrasions, but scrim exposed at 50,000 abrasions.
VG: Base material not exposed at 50,000 abrasions.

(f) Flexibility

Artificial leather sampled at 25 cm$^2$ was placed in an indoor environment at 20°C, 65% RH for 10 hours or longer for humidification. The subjective handleability after handling in the same indoor environment was then assessed on the following scale to evaluate the flexibility. The assessment is made with 0.5 grade increments.

Grade 5: Very flexible
Grade 4: Flexible
Grade 3: Somewhat flexible
Grade 2: Somewhat hard
Grade 1: Very hard

(g) Tactile sensation

Artificial leather sampled at 25 cm$^2$ was placed in an indoor environment at 20°C, 65% RH for 10 hours or longer for humidification. The subjective sample surface feel after stroking with a bare hand in the same indoor environment was then assessed on the following scale to evaluate the tactile sensation. The assessment is made with 0.5 grade increments.

> Grade 5: Extremely good tactile sensation
> Grade 4: Very good tactile sensation
> Grade 3: Good tactile sensation
> Grade 2: Somewhat poor tactile sensation
> Grade 1: Poor tactile sensation

[Example 1]

Fibrillated cotton staple fibers with a specific surface area of 0.67 m$^2$/g and an LID value of 250, and polyester staple fibers with a fiber length of 3 mm and a fiber size of 4 $\mu$m were mixed in a mass ratio of 70:30 and dispersed in water, to prepare a slurry for a surface fiber layer. The slurry was used to accumulate staple fibers by papermaking, using a woven fabric composed of 20-yarn count cotton/PET (65/35) spun yarn with a density of warp: 55/2.54 cm and weft: 60/2.54 cm as the base material, to a basis weight of 140 g/m$^2$ on one side of the base material (hereunder referred to as the "front layer") and a basis weight of 60 g/m$^2$ on the opposite side (hereunder referred to as the "back layer"), to continuously produce a nonwoven fabric sheet having a three-layer layered structure. A straight-flow injection nozzle with a hole diameter of 0.1 mm was then used to spray a water stream at a pressure of 4.0 MPa from the front layer and 3.0 MPa from the back layer for tangling treatment, and this was followed by drying with a pin tenter to produce a sheet with a basis weight of 330 g/m$^2$. The front layer of the sheet was buffed with #400 sandpaper, and the sheet was then impregnated with an aqueous dispersion comprising a polyether-based aqueous polyurethane resin at 9 mass% concentration and sodium sulfate at 3 mass%, to a polyurethane resin adhesion rate of 14.3 mass% with respect to the impregnated sheet mass, and heat dried with a pin tenter dryer for 3 minutes to produce an artificial leather supply fabric. The supply fabric was dyed black with a jet dyeing machine to produce suede-like artificial leather.

[Example 2]

Artificial leather was produced in the same manner as Example 1, except that instead of cotton staple fibers there were used pineapple staple fibers with a specific surface area of 0.53 m$^2$/g and an LID value of 250, the base material used was a woven fabric composed of 20-yarn count pineapple fiber/PET (45/55) spun yarn with a density of warp: 55/2.54 cm and weft: 60/2.54 cm, and the sheet was impregnated to a polyurethane resin adhesion rate of 4.1 mass% with respect to the impregnated sheet mass.

[Example 3]

Artificial leather was produced in the same manner as Example 1, except that instead of cotton staple fibers with a specific surface area of 0.67 m$^2$/g and an LID value of 250 there were used cotton staple fibers with a specific surface area of 1.42 m$^2$/g and an LID value of 250, and the sheet was not impregnated with an polyurethane resin aqueous dispersion.

[Example 4]

Artificial leather was produced in the same manner as Example 1, except that for production of the nonwoven fabric sheet, papermaking was carried out to a front layer basis weight of 100 g/m$^2$ and a back layer basis weight of 35 g/m$^2$, a solvent-based polyurethane resin was used instead of an aqueous polyurethane resin, and impregnation was to a polyurethane resin adhesion rate of 23.6 mass% with respect to the sheet mass.

[Example 5]

Artificial leather was produced in the same manner as Example 1, except that instead of cotton staple fibers with a specific surface area of 0.67 m$^2$/g and an LID value of 250 there were used cotton staple fibers with a specific surface area of 0.30 m$^2$/g and an LID value of 3500.

[Example 6]

Artificial leather was produced in the same manner as Example 1, except that instead of cotton staple fibers there were used wool staple fibers with a specific surface area of 0.58 $m^2/g$ and an LID value of 2500.

[Example 7]

Artificial leather was produced in the same manner as Example 1, except that the slurry used was a slurry of only cotton staple fibers with a specific surface area of 0.67 $m^2/g$ and an LID value of 250 dispersed in water, and the base material used was a woven fabric composed of 30-yarn count cotton spun yarn with a density of warp: 48/2.54 cm and weft: 50/2.54 cm.

[Example 8]

Artificial leather was produced in the same manner as Example 1, except that the mixing ratio of the cotton staple fibers and polyester staple fibers in the slurry was 35:65, and the base material used was a woven fabric composed of 20-yarn count cotton spun yarn with a density of warp: 55/2.54 cm and weft: 60/2.54 cm.

[Example 9]

Artificial leather was produced in the same manner as Example 1, except that the base material used was a woven fabric composed of 30-yarn count cotton/PET (65/35) spun yarn with a density of warp: 35/2.54 cm and weft: 40/2.54 cm.

[Example 10]

Artificial leather was produced in the same manner as Example 1, except that the sheet was impregnated to a polyurethane resin adhesion rate of 6.6 mass% with respect to the sheet mass, and instead of dyeing the supply fabric, the surface of the front layer of the supply fabric was coated with a pigment-containing water-dispersed polyurethane resin using a knife coater to a coating amount of 25 $g/m^2$.

[Example 11]

Artificial leather was produced in the same manner as Example 1, except that instead of cotton staple fibers with a specific surface area of 0.67 $m^2/g$ there were used cotton staple fibers with a specific surface area of 0.15 $m^2/g$.

[Example 12]

Artificial leather was produced in the same manner as Example 1, except that instead of cotton staple fibers with a specific surface area of 0.67 $m^2/g$ there were used cotton staple fibers with a specific surface area of 0.3 $m^2/g$.

[Example 13]

Artificial leather was produced in the same manner as Example 1, except that instead of cotton staple fibers with a specific surface area of 0.67 $m^2/g$ there were used cotton staple fibers with a specific surface area of 1.8 $m^2/g$.

[Example 14]

Artificial leather was produced in the same manner as Example 1, except that instead of cotton staple fibers with an LID value of 250 there were used cotton staple fibers with an LID value of 80.

[Comparative Example 1]

A nonwoven fabric sheet with a single layer structure was continuously produced by papermaking using a slurry in the same manner as Example 1, to a basis weight of 200 $g/m^2$. A straight-flow injection nozzle with a hole diameter of 0.1 mm was then used to spray a water stream at a pressure of 4.0 MPa from the front layer and 3.0 MPa from the back layer for tangling treatment, and this was followed by drying with a pin tenter to produce a sheet. The front layer of the sheet was buffed with #400 sandpaper, and the sheet was then impregnated with a solvent-based polyurethane resin solution to a polyurethane resin adhesion rate of 40 mass% with respect to the impregnated sheet mass, and heat dried with a pin tenter dryer for 3 minutes to produce an artificial leather supply fabric. The surface of the front layer of the supply fabric was coated with a pigment-containing solvent-based polyurethane resin using a knife coater to a coating amount of 25 g/m$^2$, to produce artificial leather.

[Comparative Example 2]

Artificial leather was produced in the same manner as Comparative Example 1, except that the solvent-based polyurethane resin adhesion rate was 4.8 mass% with respect to the impregnated sheet mass, and instead of coating the surface with a pigment-containing solvent-based polyurethane resin, the supply fabric was dyed black with a jet dyeing machine.

[Comparative Example 3]

Artificial leather was produced in the same manner as Example 1, except that the mixing ratio of the cotton staple fibers and polyester staple fibers in the slurry was 35:65, and the base material used was a woven fabric composed of 20-yarn count polyester spun yarn with a density of warp: 55/2.54 cm and weft: 60/2.54 cm.
The physical properties and evaluation results for the artificial leathers produced for the Examples and Comparative Examples are shown in Tables 1 to 3.

[Table 1]

Table 1

| | | | Example 1 | Example 2 | Example 3 | Example 4 | Example 5 | Example 6 | Example 7 |
|---|---|---|---|---|---|---|---|---|---|
| Construction | Front side fiber layer (front layer) | Contained fibers (mass ratio) | Cotton*PET (70/30) | Pineapple fibers*PET (70/30) | Cotton*PE T (70/30) | Cotton*PE T (70/30) | Cotton*PE T (70/30) | Wool*PET (70/30) | Cotton (100) |
| | | Synthetic fiber content (mass%) | 30.0 | 30.0 | 30.0 | 30.0 | 30.0 | 30.0 | 0 |
| | | L/D value of plant fibers | 250.0 | 250.0 | 250.0 | 250.0 | 3500 | 2500 | 250.0 |
| | | Basis weight (g/m$^2$) | 140 | 140 | 140 | 100 | 140 | 140 | 140 |
| | | Starting plant fiber specific surface area (m$^2$/g) | 0.67 | 0.53 | 1.42 | 0.67 | 0.3 | 0.58 | 0.67 |
| | | Standing fibers present | Yes | Yes | Yes | Yes | Yes | Yes | Yes |
| | Base material | Contained fibers (mass ratio) | Cotton*PET (65/35) | Pineapple fibers*PET (45/55) | Cotton*PE T (65/35) | Cotton*PE T (65/35) | Cotton*PE T (65/35) | Cotton*PE T (65/35) | Cotton (100) |
| | | Starting plant fiber content (mass%) | 65 | 45 | 65 | 65 | 65 | 65 | 100.0 |
| | | Basis weight (g/m$^2$) | 130 | 130 | 130 | 130 | 130 | 130 | 95 |
| | | Yarn count | 20 | 20 | 20 | 20 | 20 | 20 | 30 |
| | | Warp density | 55 | 55 | 55 | 55 | 55 | 55 | 48 |
| | | Weft density | 60 | 60 | 60 | 60 | 60 | 60 | 50 |
| | | Cover factor CF | 25.7 | 25.7 | 25.7 | 25.7 | 25.7 | 25.7 | 17.9 |
| | Front side fiber layer (back layer) | Contained fibers (mass ratio) | Cotton*PET (70/30) | Pineapple fibers*PET (70/30) | Cotton*PE T (70/30) | Cotton*PE T (70/30) | Cotton*PE T (70/30) | Wool*PET (70/30) | Cotton (100) |
| | | Synthetic fiber content (mass%) | 30.0 | 30.0 | 30.0 | 30.0 | 30.0 | 30.0 | 0 |
| | | L/D value of plant fibers | 250.0 | 250.0 | 250.0 | 250.0 | 3500 | 2500 | 250.0 |
| | | Basis weight (g/m$^2$) | 60 | 60 | 60 | 35 | 60 | 60 | 60 |
| | | Plant fiber specific surface area (m$^2$/g) | 0.67 | 0.53 | 1.42 | 0.67 | 0.3 | 0.58 | 0.67 |

(continued)

|  |  |  | Example 1 | Example 2 | Example 3 | Example 4 | Example 5 | Example 6 | Example 7 |
|---|---|---|---|---|---|---|---|---|---|
| | Binder | Resin type | Water-dispersed urethane | Water-dispersed urethane | - | Solvent-based urethane | Water-dispersed urethane | Water-dispersed urethane | Water-dispersed urethane |
| | | Content (g/m$^2$) | 55 | 14 | 0 | 82 | 55 | 55 | 55 |
| | Surface resin layer | Resin type | - | - | - | - | - | - | - |
| | | Content (g/m$^2$) | 0 | 0 | 0 | 0 | 0 | 0 | 0 |
| | All | Basis weight (g/m$^2$) | 385 | 344 | 330 | 347 | 385 | 385 | 350 |
| | | Plant fiber content (mass%) | 58.3 | 57.7 | 68.0 | 51.6 | 58.3 | 58.3 | 84.3 |
| | | Binder resin content (mass%) | 14.3 | 4.1 | 0.0 | 23.6 | 14.3 | 14.3 | 15.7 |
| | | Specific surface area of fibers composing front side fiber layer (m$^2$/g) | 0.69 | 0.59 | 1.21 | 0.69 | 0.43 | 0.63 | 0.67 |
| | | Coloring method | Dyeing | Dyeing | Dyeing | Dyeing | Dyeing | Dyeing | Dyeing |
| | | Peel strength (N/cm) | 4.1 | 2.9 | 2.2 | 5.0 | 2.7 | 3.4 | 2.5 |
| | | Surface irregularities height Sz | 326 | 405 | 259 | 383 | 411 | 376 | 350 |
| Evaluation | | Abrasion resistance | VG | G | G | G | G | VG | G |
| | | Flexibility (grade) | 4.0 | 4.5 | 5.0 | 3.0 | 4.0 | 4.0 | 4.5 |
| | | Tactile sensation (grade) | 4.0 | 3.0 | 4.5 | 3.5 | 3.5 | 3.5 | 5.0 |

[Table 2]

[Table 2]

Table 2

| | | | Example 8 | Example 9 | Example 10 | Example 11 | Example 12 | Example 13 | Example 14 |
|---|---|---|---|---|---|---|---|---|---|
| Construction | Front side fiber layer (front layer) | Contained fibers (mass ratio) | Cotton*PET (35/65) | Cotton*PET (70/30) | Cotton*PET (70/30) | Cotton*PET (70/30) | Cotton*PET (70/30) | Cotton*PET (70/30) | Cotton*PET (70/30) |
| | | Synthetic fiber content (mass%) | 65.0 | 30.0 | 30.0 | 30.0 | 30.0 | 30.0 | 30.0 |
| | | L/D value of plant fibers | 250.0 | 250.0 | 250.0 | 250 | 250 | 250 | 80 |
| | | Basis weight (g/m$^2$) | 140 | 140 | 140 | 140 | 140.0 | 140.0 | 140.0 |
| | | Starting plant fiber specific surface area (m$^2$/g) | 0.67 | 0.67 | 0.67 | 0.15 | 0.3 | 1.8 | 0.67 |
| | | Standing fibers present | Yes | Yes | No | Yes | Yes | Yes | Yes |
| | Base material | Contained fibers (mass ratio) | Cotton (100) | Cotton*PET (65/35) | Cotton*PET (65/35) | Cotton*PET (65/35) | Cotton*PET (65/35) | Cotton*PET (65/35) | Cotton*PET (65/35) |
| | | Starting plant fiber content (mass%) | 100.0 | 65 | 65 | 65 | 65.0 | 65.0 | 65.0 |
| | | Basis weight (g/m$^2$) | 130 | 55 | 130 | 130 | 130.0 | 130.0 | 130.0 |
| | | Yarn count | 20 | 30 | 20 | 20 | 20.0 | 20.0 | 20.0 |
| | | Warp density | 55 | 35 | 55 | 55 | 55.0 | 55.0 | 55.0 |
| | | Weft density | 60 | 40 | 60 | 60 | 60.0 | 60.0 | 60.0 |
| | | Cover factor CF | 25.7 | 13.7 | 25.7 | 25.7 | 25.7 | 25.7 | 25.7 |
| | Front side fiber layer (back layer) | Contained fibers (mass ratio) | Cotton*PET (35/65) | Cotton*PET (70/30) | Cotton*PET (70/30) | Cotton*PET (70/30) | Cotton*PET (70/30) | Cotton*PET (70/30) | Cotton*PET (70/30) |
| | | Synthetic fiber content (mass%) | 65.0 | 30 | 30 | 30.0 | 30.0 | 30.0 | 30.0 |
| | | L/D value of plant fibers | 250.0 | 250.0 | 250.0 | 250 | 250 | 250 | 80 |
| | | Basis weight (g/m$^2$) | 60 | 60 | 60 | 60 | 60.0 | 60.0 | 60.0 |
| | | Plant fiber specific surface area (m$^2$/g) | 0.67 | 0.67 | 0.67 | 0.13 | 0.3 | 1.8 | 0.67 |
| | Binder | Resin type | Water-dispersed urethane | Water-dispersed urethane | Water-dispersed urethane | Water-dispersed urethane | Water-dispersed urethane | Water-dispersed urethane | Water-dispersed urethane |
| | | Content (g/m$^2$) | 55 | 55 | 25 | 55 | 55.0 | 55.0 | 55.0 |

|  |  |  | Example 8 | Example 9 | Example 10 | Example 11 | Example 12 | Example 13 | Example 14 |
|---|---|---|---|---|---|---|---|---|---|
| Surface resin layer | | Resin type | - | - | Water-dispersed urethane | - | - | - | - |
| | | Content (g/m$^2$) | 0 | 0 | 25 | 0 | 0.0 | 0.0 | 0.0 |
| | All | Basis weight (g/m$^2$) | 385 | 310 | 380 | 385 | 385 | 385 | 385 |
| | | Plant fiber content (mass%) | 51.9 | 56.7 | 59.1 | 58.3 | 58.3 | 58.3 | 58.3 |
| | | Binder resin content (mass%) | 14.3 | 17.7 | 6.6 | 14.3 | 14.3 | 14.3 | 14.3 |
| | | Specific surface area of fibers composing front side fiber layer (m$^2$/g) | 0.71 | 0.69 | 0.69 | 0.32 | 0.43 | 1.48 | 0.69 |
| | | Coloring method | Dyeing | Dyeing | Pigment application | Dyeing | Dyeing | Dyeing | Dyeing |
| | | Peel strength (N/cm) | 4.4 | 2.6 | 3.8 | 6.4 | 5.5 | 2.0 | 4.8 |
| | | Surface irregularities height Sz | 349 | 672 | 98 | 432 | 377 | 215 | 333 |
| Evaluation | | Abrasion resistance | VG | G | VG | G | G | G | VG |
| | | Flexibility (grade) | 3.5 | 5.0 | 3.0 | 4.5 | 4.5 | 4.0 | 3.5 |
| | | Tactile sensation (grade) | 4.0 | 3.0 | 3.5 | 3.5 | 4.0 | 4.5 | 4.0 |

[Table 3]

Table 3

| | | | Comp. Example 1 | Comp. Example 2 | Comp. Example 3 |
|---|---|---|---|---|---|
| Construction | Front side fiber layer (front layer) | Contained fibers (mass ratio) | Cotton*PET (70/30) | Cotton*PET (70/30) | Cotton*PET (35/65) |
| | | Synthetic fiber content (mass%) | 30.0 | 30.0 | 65.0 |
| | | L/D value of plant fibers | 250.0 | 250.0 | 250.0 |
| | | Basis weight (g/m$^2$) | 200 | 200 | 140 |
| | | Starting plant fiber specific surface area (m$^2$/g) | 0.67 | 0.67 | 0.67 |
| | | Standing fibers present | No | No | Yes |
| | Base material | Contained fibers (mass ratio) | - | - | PET (100) |
| | | Starting plant fiber content (mass%) | - | - | 0 |
| | | Basis weight (g/m$^2$) | - | - | 130 |
| | | Yarn count | - | - | 20 |
| | | Warp density | - | - | 55 |
| | | Weft density | - | - | 60 |
| | | Cover factor CF | - | - | 25.7 |
| | Front side fiber layer (back layer) | Contained fibers (mass ratio) | Cotton*PET (70/30) | Cotton*PET (70/30) | Cotton*PET (35/65) |
| | | Synthetic fiber content (mass%) | - | - | 65.0 |
| | | L/D value of plant fibers | - | - | 250.0 |
| | | Basis weight (g/m$^2$) | - | - | 60 |
| | | Plant fiber specific surface area (m$^2$/g) | - | - | 0.67 |
| | Binder | Resin type | Solvent-based urethane | Solvent-based urethane | Water-dispersed urethane |
| | | Content (g/m$^2$) | 150 | 10 | 55 |
| | Surface resin layer | Resin type | Solvent-based urethane | - | - |
| | | Content (g/m$^2$) | 25 | 0 | 0 |
| | All | Basis weight (g/m$^2$) | 375 | 210 | 385 |
| | | Plant fiber content (mass%) | 37.3 | 66.7 | 18.2 |

(continued)

|  | | | Comp. Example 1 | Comp. Example 2 | Comp. Example 3 |
|---|---|---|---|---|---|
|  | | Binder resin content (mass%) | 40.0 | 4.8 | 14.3 |
|  | | Specific surface area of fibers composing front side fiber layer ($m^2/g$) | 0.69 | 0.69 | 0.71 |
|  | | Coloring method | Pigment application | Dyeing | Dyeing |
|  | | Peel strength (N/cm) | - | - | 5.6 |
|  | | Surface irregularities height Sz | 331 | 388 | 364 |
| Evaluation | | Abrasion resistance | VG | P | VG |
|  | | Flexibility (grade) | 1.5 | 4.0 | 2.0 |
|  | | Tactile sensation (grade) | 1.5 | 2.0 | 1.5 |

INDUSTRIAL APPLICABILITY

The present invention, as artificial leather comprising a large amount of plant fibers and exhibiting both softness and abrasion resistance, can be used for a wide range of purposes including furniture, clothing, automotive industry products, shoes and bags, and is especially suitable for use as a vehicle interior skin material.

**Claims**

1. Artificial leather comprising a base material composed of a fiber fabric, and a front side fiber layer layered on the base material, the artificial leather satisfying the following features (1) to (3):

   (1) the base material and the front side fiber layer both comprise plant fibers;
   (2) the content of the plant fibers in the artificial leather is 50 mass% or greater with respect to the total mass of the artificial leather; and
   (3) the peel strength between the base material and the front side fiber layer is 2 N/cm or greater.

2. The artificial leather according to claim 1, wherein the content of the plant fibers in the base material is 50 mass% or greater with respect to the total mass of the base material.

3. The artificial leather according to claim 1 or 2, wherein the artificial leather comprises a binder resin.

4. The artificial leather according to claim 3, wherein the content of the binder resin is greater than 0 mass% and 20 mass% or lower with respect to the total mass of the artificial leather.

5. The artificial leather according to claim 3, wherein the binder resin is a polyurethane resin.

6. The artificial leather according to claim 5, wherein the polyurethane resin is a water-dispersed polyurethane resin.

7. The artificial leather according to claim 1 or 2, wherein the LID value, as the ratio of the fiber length L with respect to the fiber diameter D of the plant fibers in the front side fiber layer, is 50 to 4000.

8. The artificial leather according to claim 1 or 2, wherein the front side fiber layer includes cellulose fibrils.

9. The artificial leather according to claim 1 or 2, wherein the specific surface area of the fibers composing the front side fiber layer is 0.10 $m^2/g$ or greater.

10. The artificial leather according to claim 1 or 2, further satisfying the following feature (4):
    (4) the front side fiber layer includes cellulose fibrils having a specific surface area of 0.5 $m^2/g$ to 1.5 $m^2/g$.

11. The artificial leather according to claim 1 or 2, wherein the front side fiber layer includes synthetic fibers.

12. The artificial leather according to claim 11, wherein the content of the synthetic fibers in the front side fiber layer is 25 mass% to 50 mass% with respect to the total mass of the fibers in the front side fiber layer.

13. The artificial leather according to claim 1 or 2, wherein the base material is a woven fabric.

14. The artificial leather according to claim 13, wherein the cover factor CF of the woven fabric is 15 to 40.

15. The artificial leather according to claim 1 or 2, wherein the height Sz of the surface irregularities of the artificial leather is 200 $\mu$m to 600 $\mu$m.

16. The artificial leather according to claim 1 or 2, wherein the surface of the artificial leather has standing fibers.

17. The artificial leather according to claim 1 or 2, wherein the artificial leather is dyed.

18. A vehicle interior skin material comprising artificial leather according to claim 1 or 2.

# INTERNATIONAL SEARCH REPORT

| International application No. |
|---|
| **PCT/JP2023/014582** |

**A. CLASSIFICATION OF SUBJECT MATTER**

*D06N 3/00*(2006.01)i; *B32B 5/26*(2006.01)i; *D06N 3/14*(2006.01)i
FI: D06N3/00; B32B5/26; D06N3/14

According to International Patent Classification (IPC) or to both national classification and IPC

**B. FIELDS SEARCHED**

Minimum documentation searched (classification system followed by classification symbols)

B32B1/00-43/00, D06N1/00-7/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 2017-106158 A (ANANAS ANAM LTD) 15 June 2017 (2017-06-15) claims, paragraphs [0066], [0072], [0073], [0077], [0078], [0086]-[0095] | 1-11, 17, 18 |
| Y | | 1-11, 15-18 |
| Y | JP 2017-137587 A (ASAHI KASEI CORP) 10 August 2017 (2017-08-10) paragraph [0033], examples | 1-11, 13-18 |
| Y | JP 2006-187976 A (KURARAY CO LTD) 20 July 2006 (2006-07-20) paragraph [0015], examples | 1-11, 13-18 |
| Y | JP 49-85202 A (BARLOWS COATED FABRICS LTD) 15 August 1974 (1974-08-15) claims, p. 2, upper left column, lines 3-6, 12-18, p. 2, upper right column, line 17 to lower left column, line 2, p. 2, lower left column, line 18 to lower right column, line 3, fig. 2 | 1-6, 8, 13-17 |
| A | JP 40-13714 B1 (TOYO BOSEKI KABUSHIKI KAISHA) 01 July 1965 (1965-07-01) | 1-17 |
| A | JP 63-99378 A (J H BENECKE GMBH) 30 April 1988 (1988-04-30) | 1-17 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 June 2023** | **11 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/014582**

| Patent document cited in search report | | | Publication date (day/month/year) | Patent family member(s) | Publication date (day/month/year) |
|---|---|---|---|---|---|
| JP | 2017-106158 | A | 15 June 2017 | US 2013/0149512 A1 claims, paragraphs [0095], [0101], [0103], [0106], [0107], [0117]-[0127] WO 2011/148136 A2 EP 2576881 A1 CN 103038404 A | |
| JP | 2017-137587 | A | 10 August 2017 | (Family: none) | |
| JP | 2006-187976 | A | 20 July 2006 | (Family: none) | |
| JP | 49-85202 | A | 15 August 1974 | GB 1431775 A claims, p. 1, right column, lines 57-61, p. 2, left column, lines 17-24, p. 2, left column, lines 42-44, fig. 2 | |
| JP | 40-13714 | B1 | 01 July 1965 | (Family: none) | |
| JP | 63-99378 | A | 30 April 1988 | US 4740407 A EP 238476 A2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017106158 A